# EUROPEAN PATENT SPECIFICATION

(11) **EP 3 790 307 B1**
(45) Date of publication and mention of the grant of the patent: **21.12.2022**
(21) Application number: 19799118.5
(22) Date of filing: 08.03.2019
(51) Int. Cl.: H04L 5/00

(54) **METHOD AND DEVICE FOR COMMUNICATION**
KOMMUNIKATIONSVERFAHREN UND -VORRICHTUNG
PROCÉDÉ ET DISPOSITIF DE COMMUNICATION

(30) Priority: 11.05.2018 CN 201810450413
(43) Date of publication of application: 10.03.2021
(73) Proprietor: HUAWEI TECHNOLOGIES CO., LTD., Shenzhen, Guangdong 518129 (CN)
(72) Inventor: XIANG, Zhengzheng, Shenzhen, Guangdong 518129, (CN); LUO, Jun, Shenzhen, Guangdong 518129, (CN); LU, Lei, Shenzhen, Guangdong 518129, (CN)
(74) Representative: MERH-IP Matias Erny Reichl Hoffmann Patentanwälte PartG mbB
(86) International application number: PCT/CN2019/077395
(87) International publication number: WO 2019/214333

(56) References cited:
- WO-A1-2018/143760
- CN-A- 105 580 297
- CN-A- 106 165 323
- US-A1- 2018 124 618
- HUAWEI ET AL: "Correction of timing information in MeasObjectNR", 3GPP DRAFT; R2-1808084, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Korea; 20180521 - 20180525 10 May 2018 (2018-05-10), XP051464285, Retrieved from the Internet: URL:http://www.3gpp.org/ftp/tsg%5Fran/WG2% 5FRL2/TSGR2%5F102/Docs [retrieved on 2018-05-10]
- HUAWEI ET AL: "Timing information in MeasObjectNR", 3GPP DRAFT; R2-1808083, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Korea; 20180521 - 20180525 10 May 2018 (2018-05-10), XP051464284, Retrieved from the Internet: URL:http://www.3gpp.org/ftp/tsg%5Fran/WG2% 5FRL2/TSGR2%5F102/Docs [retrieved on 2018-05-10]
- RAN WG1: "Reply LS on RAN2 agreements on RRM", 3GPP DRAFT; R1-1805762, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 26 April 2018 (2018-04-26), XP051449065, Retrieved from the Internet: URL:http://www.3gpp.org/ftp/tsg%5Fran/WG1% 5FRL1/TSGR1%5F92b/LS/Outgoing/ [retrieved on 2018-04-26]
- HUAWEI ET AL: "Cell Quality Adjustment for Connected UE", 3GPP DRAFT; R2-1808094, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Korea; 20180521 - 20180525 10 May 2018 (2018-05-10), XP051519503, Retrieved from the Internet: URL:http://www.3gpp.org/ftp/tsg%5Fran/WG2% 5FRL2/TSGR2%5F102/Docs/R2%2D1808094%2Ezip [retrieved on 2018-05-10]
- ERICSSON: "Missing need code for refFreqCSI-RS", 3GPP TSG-RAN2 Meeting #104, R2-1818863, 30 November 2018 (2018-11-30), XP051495107,
- HUAWEI: "CR to 38.331 on associatedSSB", 3GPP TSG-RAN2 WG2#104, R2-1818864, 12 November 2018 (2018-11-12), XP051495108,

## Description

### TECHNICAL FIELD

This application relates to the field of communications technologies, and in particular, to a mobility measurement technology.

### BACKGROUND

Mobility measurement is an important part of a radio communication network. A terminal device may obtain signal quality of a serving cell and a neighboring cell by performing mobility measurement, and report a related measurement result to a network device. The network device determines, based on the measurement result reported by the terminal device, whether the terminal device is to perform a cell handover.

In a next generation radio communication network (new radio, NR), the network device may independently configure a synchronization signal block (synchronization signal block, SSB) or a channel state information-reference signal (channel state information-reference signal, CSI-RS) for the terminal device to perform mobility measurement.

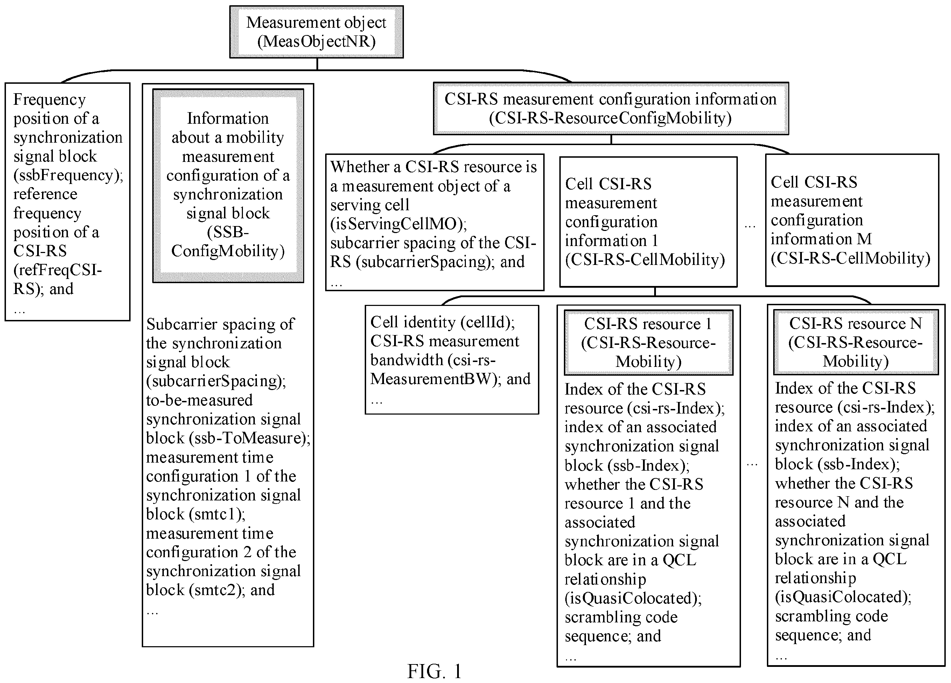

The network device may configure one or more measurement objects for the terminal device. FIG. 1 is a schematic structural diagram of a measurement object configuration in the prior art. When each measurement object includes a synchronization signal block that is configured by the network device for the terminal device and that is used for mobility measurement, a frequency position, a subcarrier spacing, and the like of the synchronization signal block are indicated. Likewise, when a CSI-RS used for mobility measurement is configured by the network device for the terminal device, a frequency position, a subcarrier spacing, and the like of the CSI-RS are also indicated. In addition, the network device may further configure an associated synchronization signal block for each CSI-RS, and whether the CSI-RS is quasi co-located (quasi co-located, QCL) with the synchronization signal block associated with the CSI-RS is indicated. The associated synchronization signal block may be the foregoing synchronization signal block configured for mobility measurement. If two signals are in a QCL relationship, it indicates that the two signals have one or more same related parameter such as a Doppler spread or a beam direction. When the terminal device receives a CSI-RS to perform mobility measurement, if a synchronization signal block associated with the CSI-RS is configured, and the CSI-RS and the synchronization signal block associated with the CSI-RS are in a QCL relationship, the terminal device receives the CSI-RS based on a parameter, such as a Doppler spread or a beam direction, of the associated synchronization signal block.

The network device may configure only a synchronization signal block or a CSI-RS in the measurement object for mobility measurement, or may configure both a synchronization signal block and a CSI-RS for mobility measurement.

When the network device configures, for the terminal device, only a CSI-RS for mobility measurement, and no synchronization signal block is configured for mobility measurement, the terminal device does not know one or more related parameter, such as a frequency position and a subcarrier spacing, of a synchronization signal block associated with the CSI-RS. Therefore, the terminal device needs to blindly detect the associated synchronization signal block. Consequently, complexity of receiving the synchronization signal block by the terminal device is increased. Prior art documents:
D1: Huawei et al.: "Correction of timing information in MeasObjectNR", 3GPP Draft, R2-1808084, May 10, 2018
D2: Huawei et al.: "Timing information in MeasObjectNR", 3GPP Draft, R2-1808083, May 10, 2018
D3: RAN WG1: "Reply LS on RAN2 agreements on RRM", 3GPP Draft, R1-1805762, April 26,2018
D4: Huawei et al.: "Cell Quality Adjustment for Connected UE", 3GPP Draft, R2-1808094, May 10, 2018

Documents D1 to D4 disclose to provide the frequency and sub-carrier-spacing of a synchronization signal block in a measurement object configuration for a terminal device, wherein the synchronization signal block is associated with one or more channel state information-reference signals. The frequency and sub-carrier-spacing of a synchronization signal block is used to receive the synchronization signal block when no synchronization signal block is configured for mobility measurement by the network device for the terminal device.

### SUMMARY

This application provides a communications method and apparatus, to improve accuracy of receiving an associated synchronization signal block when a terminal device is serviced by multiple cells . The invention is defined by the independent claims. Possible implementations denote preferred implementations of the invention. Examples are not encompassed by the claims.

According to a first aspect, a communication method is provided, including: receiving a measurement object configuration from a network device, where the measurement object configuration includes mobility measurement configurations of one or more channel state information-reference signals CSI-RSs, and a first parameter of a synchronization signal block associated with the CSI-RSs, and the measurement object configuration is used to indicate a terminal device to perform mobility measurement; and sending a mobility measurement result to the network device, wherein the mobility measurement configurations of the CSI-RSs further comprise a serving cell identity that is used to determine timing information of a cell for which the terminal device needs to perform measurement.

In this aspect, a parameter of a synchronization signal block associated with a CSI-RS is included in the measurement object configuration, thereby improving accuracy of receiving the associated synchronization signal block. In addition, a common parameter of the synchronization signal block is configured in the measurement object configuration, so that signaling overheads of configuration can be reduced. In this implementation, if there are a plurality of serving cells currently, and each serving cell has different timing information, a serving cell identity used to determine timing information of a cell for which the terminal device needs to perform measurement is included in a mobility measurement configuration of a CSI-RS, so that the terminal device performs communication based on timing information of an indicated serving cell.

According to a second aspect, a communication method is provided, including: sending a measurement object configuration to a terminal device, where the measurement object configuration includes mobility measurement configurations of one or more channel state information-reference signals CSI-RSs, and a first parameter of a synchronization signal block associated with the CSI-RSs, and the measurement object configuration is used to indicate the terminal device to perform mobility measurement; and receiving a mobility measurement result from the terminal device, wherein the mobility measurement configurations of the CSI-RSs further comprise a serving cell identity that is used to determine timing information of a cell for which the terminal device needs to perform measurement.

In this aspect, a parameter of a synchronization signal block associated with a CSI-RS is included in the measurement object configuration, thereby improving accuracy of receiving the associated synchronization signal block. In this implementation, if there are a plurality of serving cells currently, and each serving cell has different timing information, a serving cell identity used to determine timing information of a cell for which the terminal device needs to perform measurement is included in a mobility measurement configuration of a CSI-RS, so that the terminal device performs communication based on timing information of an indicated serving cell.

With reference to the first aspect or the second aspect, in a possible implementation, the mobility measurement configurations of the CSI-RSs further include second parameters of the synchronization signal blocks associated with the CSI-RSs.

In this implementation, the mobility measurement configurations of the CSI-RSs further include parameters such as indexes of the synchronization signal blocks and whether the CSI-RSs are quasi co-located with the synchronization signal blocks, to determine the synchronization signal blocks associated with the CSI-RSs.

With reference to the first aspect or the second aspect, in another possible implementation, the synchronization signal blocks associated with the one or more CSI-RSs have a same first parameter.

In this implementation, during configuration, a first parameter of only one synchronization signal block needs to be configured in the measurement object configuration, and the synchronization signal blocks associated with the one or more CSI-RSs have the same first parameter.

According to an example, a communication method is provided, including: receiving mobility measurement configurations, of one or more channel state information-reference signals CSI-RSs, that are from a network device, where the mobility measurement configurations of the CSI-RSs include a first parameter of a synchronization signal block associated with the CSI-RSs, and the mobility measurement configurations of the CSI-RSs are used to indicate a terminal device to perform mobility measurement; and sending a mobility measurement result to the network device.

In this example, a parameter of a synchronization signal block associated with a CSI-RS is included in a mobility measurement configuration of the CSI-RS, thereby improving accuracy of receiving the associated synchronization signal block.

With reference to the example above, in a example, the method further includes: receiving a measurement object configuration from the network device, where the measurement object configuration includes the mobility measurement configurations of the one or more CSI-RSs, and the mobility measurement configurations of the CSI-RSs further include second parameters of the synchronization signal blocks.

In this example, the mobility measurement configurations of the CSI-RSs further include parameters such as indexes of the synchronization signal blocks and whether the CSI-RSs are quasi co-located with the synchronization signal blocks, to determine the synchronization signal blocks associated with the CSI-RSs.

According to an example, a communication method is provided, including: sending mobility measurement configurations of one or more channel state information-reference signals CSI-RSs to a terminal device, where the mobility measurement configurations of the CSI-RSs include a first parameter of a synchronization signal block associated with the CSI-RSs, and the mobility measurement configurations of the CSI-RSs are used to indicate the terminal device to perform mobility measurement; and receiving a mobility measurement result from the terminal device.

In this example, a parameter of a synchronization signal block associated with a CSI-RS is included in a mobility measurement configuration of the CSI-RS, thereby improving accuracy of receiving the associated synchronization signal block.

With reference to the example above, in a example, the method further includes: sending a measurement object configuration to the terminal device, where the measurement object configuration includes the mobility measurement configurations of the one or more CSI-RSs, and the mobility measurement configurations of the CSI-RSs further include second parameters of the synchronization signal blocks.

In this example, the mobility measurement configurations of the CSI-RSs further include parameters such as indexes of the synchronization signal blocks and whether the CSI-RSs are quasi co-located with the synchronization signal blocks, to determine the synchronization signal blocks associated with the CSI-RSs.

With reference to the foregoing aspects, in a possible implementation, the first parameter of the synchronization signal block includes one or more of the following parameters: a frequency position of the synchronization signal block and a subcarrier spacing of the synchronization signal block.

In this implementation, the synchronization signal block may be accurately received based on the first parameter of the synchronization signal block.

With reference to the foregoing aspects, in another possible implementation, the second parameter of the synchronization signal block includes one or more of the following parameters: an index of the synchronization signal block and whether the CSI-RS is quasi co-located with the synchronization signal block.

According to a third aspect, a communications apparatus is provided, where the communications apparatus can implement the communication method according to the first aspect. For example, the communications apparatus may be a chip (such as a baseband chip or a communication chip) or a terminal device. The foregoing method may be implemented by using software or hardware, or by hardware executing corresponding software.

In a possible implementation, a processor and a memory are included in a structure of the communications apparatus. The processor is configured to support the apparatus in performing a corresponding function in the foregoing communication method. The memory is configured to be coupled to the processor, and stores a program (an instruction) necessary for the apparatus and/or data necessary for the apparatus. Optionally, the communications apparatus may further include a communications interface, configured to support communication between the apparatus and another network element.

In another possible implementation, the communications apparatus may include a unit or a module for performing a corresponding action in the foregoing method.

In still another possible implementation, a processor and a transceiver apparatus are included. The processor is coupled to the transceiver apparatus. The processor is configured to execute a computer program or an instruction, to control the transceiver apparatus to send and receive information, and when the processor executes the computer program or the instruction, the processor is further configured to implement the foregoing method. The transceiver apparatus may be a transceiver, a transceiver circuit, or an input/output interface. When the communications apparatus is the chip, the transceiver apparatus is the transceiver circuit or the input/output interface.

When the communications apparatus is the chip, a sending unit may be an output unit, for example, an output circuit or a communications interface, and a receiving unit may be an input unit, for example, an input circuit or a communications interface. When the communications apparatus is a terminal device, a sending unit may be a transmitter, and a receiving unit may be a receiver.

According to a fourth aspect, a communications apparatus is provided, where the communications apparatus can implement the communication method according to the second aspect. For example, the communications apparatus may be a chip (such as a baseband chip or a communication chip) or a network device. The foregoing method may be implemented by using software or hardware, or by hardware executing corresponding software.

In a possible implementation, a processor and a memory are included in a structure of the communications apparatus. The processor is configured to support the apparatus in performing a corresponding function in the foregoing communication method. The memory is configured to be coupled to the processor, and stores a program (an instruction) necessary for the apparatus and data necessary for the apparatus. Optionally, the communications apparatus may further include a communications interface, configured to support communication between the apparatus and another network element.

In another possible implementation, the communications apparatus may include a unit or a module for performing a corresponding action in the foregoing method.

In still another possible implementation, a processor and a transceiver apparatus are included. The processor is coupled to the transceiver apparatus. The processor is configured to execute a computer program or an instruction, to control the transceiver apparatus to send and receive information, and when the processor executes the computer program or the instruction, the processor is further configured to implement the foregoing method. The transceiver apparatus may be a transceiver, a transceiver circuit, or an input/output interface. When the communications apparatus is the chip, the transceiver apparatus is the transceiver circuit or the input/output interface.

When the communications apparatus is the chip, a receiving unit may be an input unit, for example, an input circuit or a communications interface, and a sending unit may be an output unit, for example, an output circuit or a communications interface. When the communications apparatus is a network device, a receiving unit may be a receiver, and a sending unit may be a transmitter.

According to a example, a computer readable storage medium is provided. The computer readable storage medium stores a computer program or an instruction, and when the computer program or the instruction is run on a computer, the computer is enabled to perform the methods according to the foregoing aspects.

According to an fifth aspect, a computer program product including an instruction is provided. When the computer program product runs on a computer, the computer is enabled to perform the methods according to the foregoing aspects.

### BRIEF DESCRIPTION OF DRAWINGS

To describe the technical solutions in the embodiments or the background of the present invention more clearly, the following describes the accompanying drawings required for the embodiments or the background of the present invention.
FIG. 1 is a schematic structural diagram of a measurement object configuration in the prior art;
FIG. 2 is a schematic structural diagram of a communications system according to this application;
FIG. 3 is a schematic flowchart of a communication method according to an embodiment of this application;
FIG. 4a is a schematic structural diagram of an example of a measurement object configuration according to an embodiment of this application;
FIG. 4b is a schematic structural diagram of an example of another measurement object configuration according to an embodiment of this application;
FIG. 4c is a schematic structural diagram of an example of still another measurement object configuration according to an embodiment of this application;
FIG. 5 is a schematic flowchart of another communication method according to an example;
FIG. 6 is a schematic structural diagram of an example of still another measurement object configuration according to an embodiment of this application;
FIG. 7 is a schematic structural diagram of an example of still another measurement object configuration according to an embodiment of this application;
FIG. 8 is a schematic structural diagram of a communications apparatus according to an embodiment of this application;
FIG. 9 is a schematic structural diagram of another communications apparatus according to an embodiment of this application;
FIG. 10 is a schematic structural diagram of still another communications apparatus according to an embodiment of this application;
FIG. 11 is a schematic structural diagram of still another communications apparatus according to an embodiment of this application;
FIG. 12 is a schematic structural diagram of hardware of a terminal device according to an embodiment of this application; and
FIG. 13 is a schematic structural diagram of hardware of a network device according to an embodiment of this application.

### DESCRIPTION OF EMBODIMENTS

The following describes the embodiments of the present invention with reference to the accompanying drawings in the embodiments of the present invention.

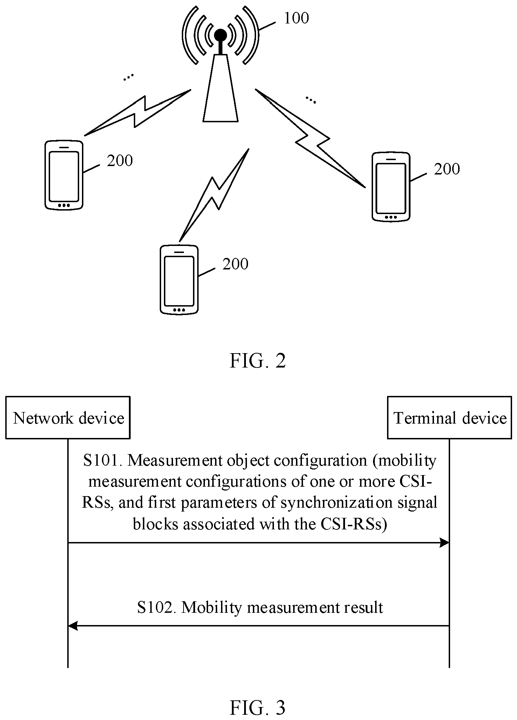

FIG. 2 is a schematic structural diagram of a communications system according to this application. The communications system may include at least one network device 100 (only one network device 100 is shown) and one or more terminal devices 200 connected to the network device 100.

The network device 100 may be a device that can communicate with the terminal device 200. The network device 100 may be any device having a wireless transceiving function, and includes but is not limited to a NodeB, an evolved NodeB eNodeB, a base station in a fifth generation (fifth generation, 5G) communications system, a base station or a network device in a future communications system, an access node in a WiFi system, a wireless relay node, a wireless backhaul node, and the like. The network device 100 may alternatively be a radio controller in a cloud radio access network (cloud radio access network, CRAN) scenario. The network device 100 may alternatively be a small cell, a transmission reception point (transmission reception point, TRP), or the like. A specific technology and a specific device form that are used by the network device are not limited in the embodiments of this application.

The terminal device 200 is a device having a wireless transceiving function. The terminal device 200 may be deployed on land, including an indoor or outdoor device, a handheld device, a wearable device, or a vehicle-mounted device; or may be deployed on a water surface, for example, on a ship; or may be deployed in the air, for example, on a plane, a balloon, or a satellite. The terminal device 200 may be a mobile phone (mobile phone), a tablet computer (Pad), a computer with a wireless transceiving function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. The terminal device may sometimes be referred to as user equipment (user equipment, UE), an access terminal device, a UE unit, a mobile station, a mobile console, a remote station, a remote terminal device, a mobile device, a terminal (terminal), a wireless communications device, a UE agent, a UE apparatus, or the like.

It should be noted that the terms "system" and "network" in the embodiments of the present invention may be used interchangeably. The term "a plurality of' means "two or more". In view of this, "a plurality of' may also be understood as "at least two" in the embodiments of the present invention. The term "and/or" describes an association relationship between associated objects and indicates that three relationships may exist. For example, A and/or B may represent the following three cases: only A exists, both A and B exist, and only B exists. In addition, the character "/" generally indicates an "or" relationship between the associated objects unless otherwise specified.

This application provides a communications method and apparatus. A parameter of a synchronization signal block associated with a CSI-RS is included in a measurement object configuration or a mobility measurement configuration of the CSI-RS, thereby improving accuracy of receiving the associated synchronization signal block.

FIG. 3 is a schematic flowchart of a communication method according to an embodiment of this application.

S101. A network device sends a measurement object configuration to a terminal device, and the terminal device receives the measurement object configuration, where the measurement object configuration includes mobility measurement configurations of one or more CSI-RSs, and a first parameter of a synchronization signal block associated with the CSI-RSs, and the measurement object configuration is used to indicate the terminal device to perform mobility measurement.

S102. The terminal device sends a mobility measurement result to the network device, and the network device receives the mobility measurement result.

In this embodiment, the network device configures a CSI-RS for the terminal device to perform mobility measurement. The measurement object configuration includes the mobility measurement configurations of the one or more CSI-RSs, and some common parameters in the mobility measurement configurations of all the CSI-RSs included in the measurement object. A mobility measurement configuration of a CSI-RS includes an index of a CSI-RS (csi-rs-index), an index of an associated synchronization signal block (ssb-index), whether the CSI-RS is quasi co-located with the associated synchronization signal block (isQuasiColocated), a scrambling code sequence, and the like. Whether the CSI-RS is quasi co-located with the associated synchronization signal block means whether there is a quasi co-located relationship (quasi co-located, QCL) between the CSI-RS and the associated synchronization signal block. In this embodiment, the common parameters include the first parameter of the synchronization signal blocks associated with the CSI-RSs. In addition, the common parameters may further include a reference frequency position of the CSI-RSs (refFreqCSI-RS).

The first parameter of the synchronization signal block includes one or more of the following parameters: a frequency position of the synchronization signal block (ssbFrequency) and a subcarrier spacing of the synchronization signal block (ssbSubcarrierSpacing). In this embodiment, the first parameter of the synchronization signal blocks associated with the CSI-RSs are configured in the common parameters of the measurement object. To be specific, the synchronization signal blocks associated with the one or more CSI-RSs have a same first parameter. The one or more CSI-RSs may be associated with a same synchronization signal block, or may be associated with different synchronization signal blocks, and the one or more synchronization signal blocks have the same first parameter.

In addition, the index of the associated synchronization signal block and whether the CSI-RS is quasi co-located with the associated synchronization signal block may be referred to as second parameters of the synchronization signal block associated with the CSI-RS, where the index of the associated synchronization signal block and whether the CSI-RS is quasi co-located with the associated synchronization signal block are included in the mobility measurement configuration of the CSI-RS. The synchronization signal block associated with the CSI-RS may be identified based on the second parameters.

The measurement object configuration may be in a form of a structure. An example of the structure is as follows:

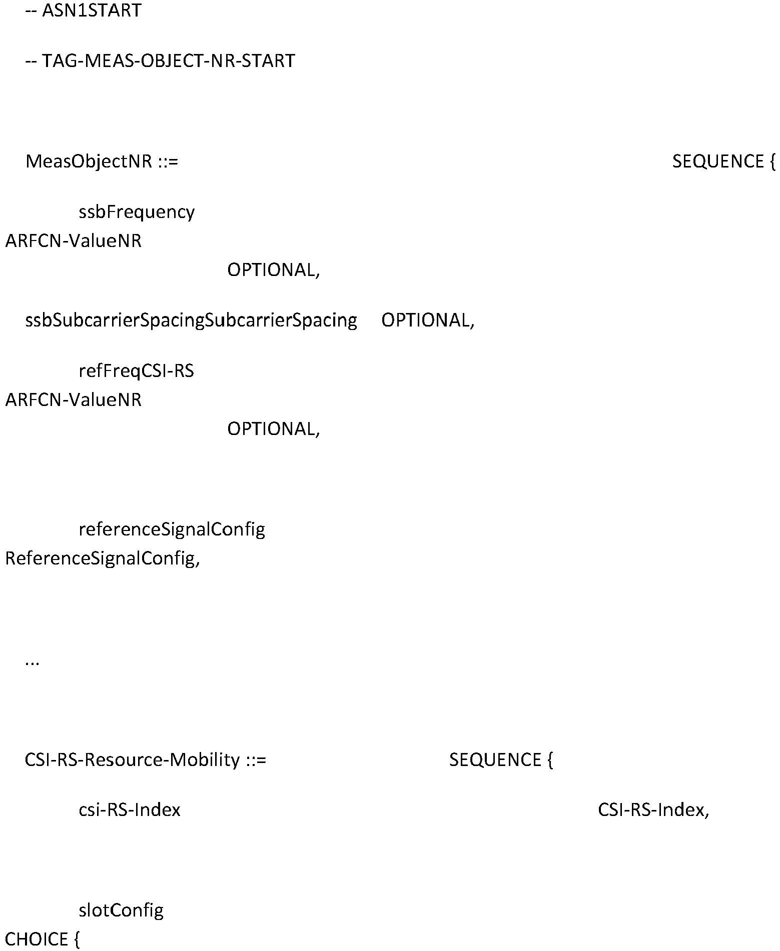

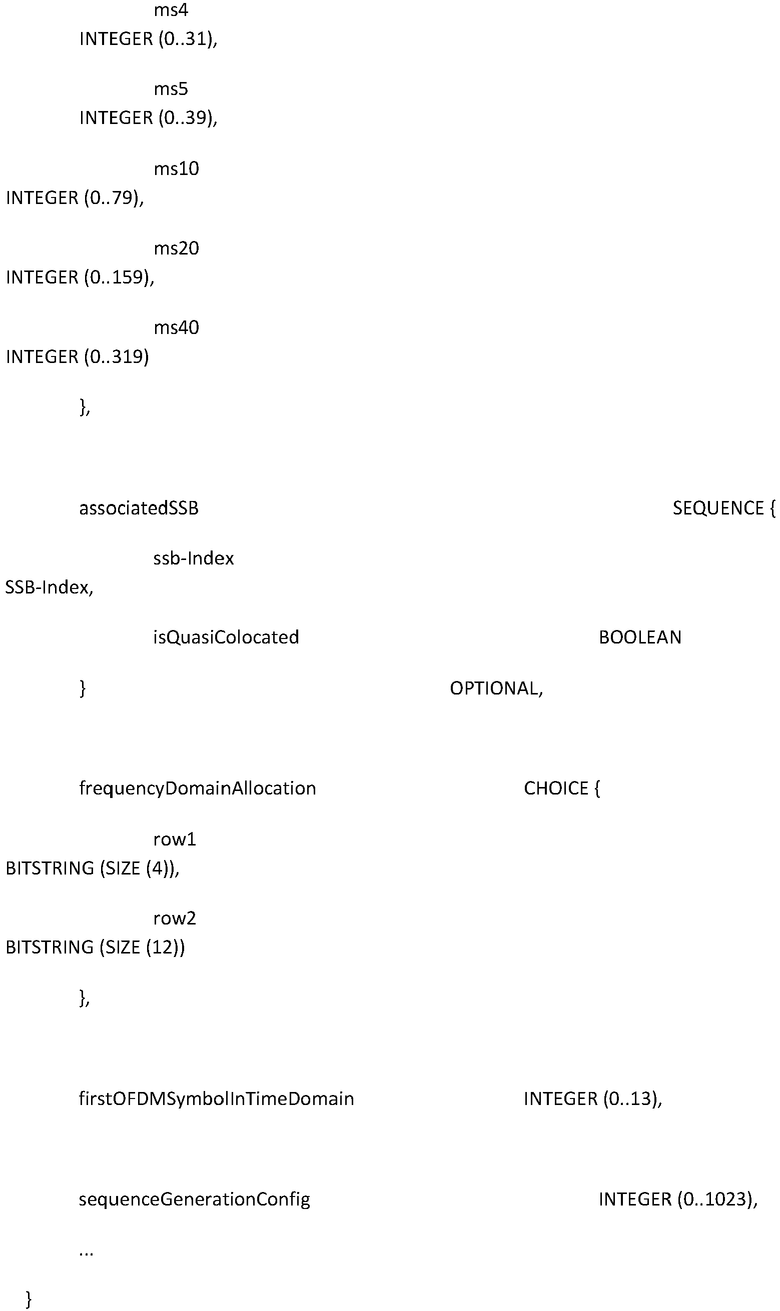

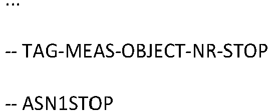

The measurement object configuration (MeasObjectNR) includes frequency positions and subcarrier spacings that are of the synchronization signal blocks associated with all the CSI-RSs and that are included in the measurement object configuration. Optionally, the measurement object configuration further includes the reference frequency position and a reference signal configuration of the CSI-RSs. The measurement object configuration further includes the mobility measurement configurations of the one or more CSI-RSs (CSI-RS-Resource-Mobility).

The terminal device may accurately receive, based on a first parameter, of a synchronization signal block, that is included in the measurement object configuration, the synchronization signal block associated with a CSI-RS. Further, if there is a QCL relationship between the CSI-RS and the synchronization signal block, the terminal device may receive the CSI-RS based on a parameter, such as a Doppler spread or a beam direction, of the associated synchronization signal block. In addition, in an asynchronous network, when measuring a CSI-RS of a neighboring cell based on the measurement object configuration, the terminal device may determine timing information of the neighboring cell by receiving a synchronization signal block associated with the CSI-RS (where a synchronization signal block of a neighboring cell carries timing information of the neighboring cell), and then receive, based on the timing information, the CSI-RS from the neighboring cell.

The terminal device performs mobility measurement based on the mobility measurement configurations of the CSI-RSs. Specifically, the one or more CSI-RSs are received based on the mobility measurement configurations of the one or more CSI-RSs. The one or more CSI-RSs are measured to obtain the mobility measurement result, and the mobility measurement result is sent to the network device.

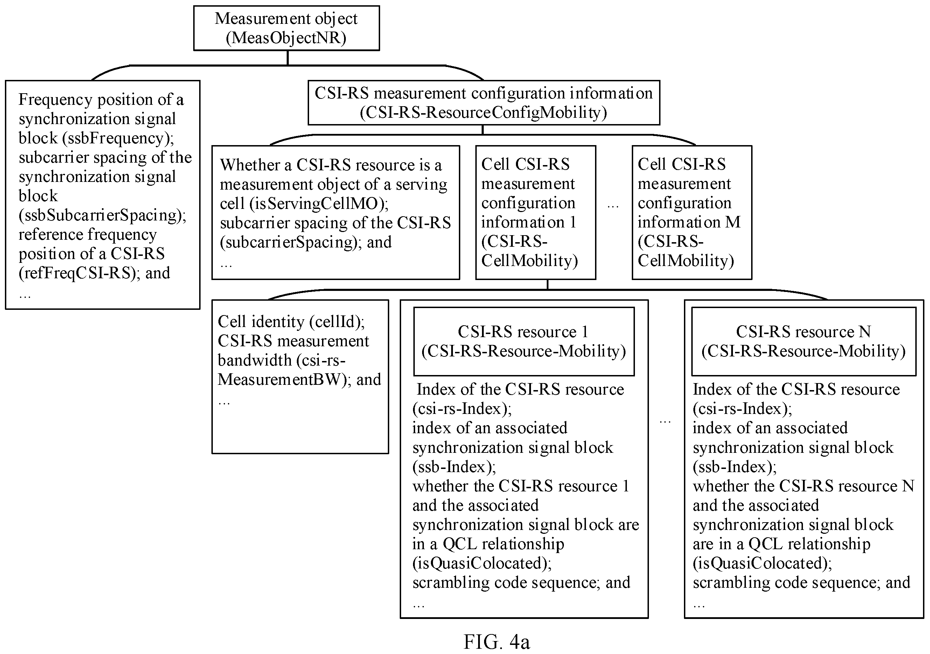

In some feasible embodiments, for example, FIG. 4a is a schematic structural diagram of an example of a measurement object configuration according to an embodiment of this application. Common parameters in the measurement object configuration include a frequency position and a subcarrier spacing that are of a synchronization signal block associated with a CSI-RS. To be specific, synchronization signal blocks associated with all CSI-RSs included in the measurement object have the same frequency position and the same subcarrier spacing.

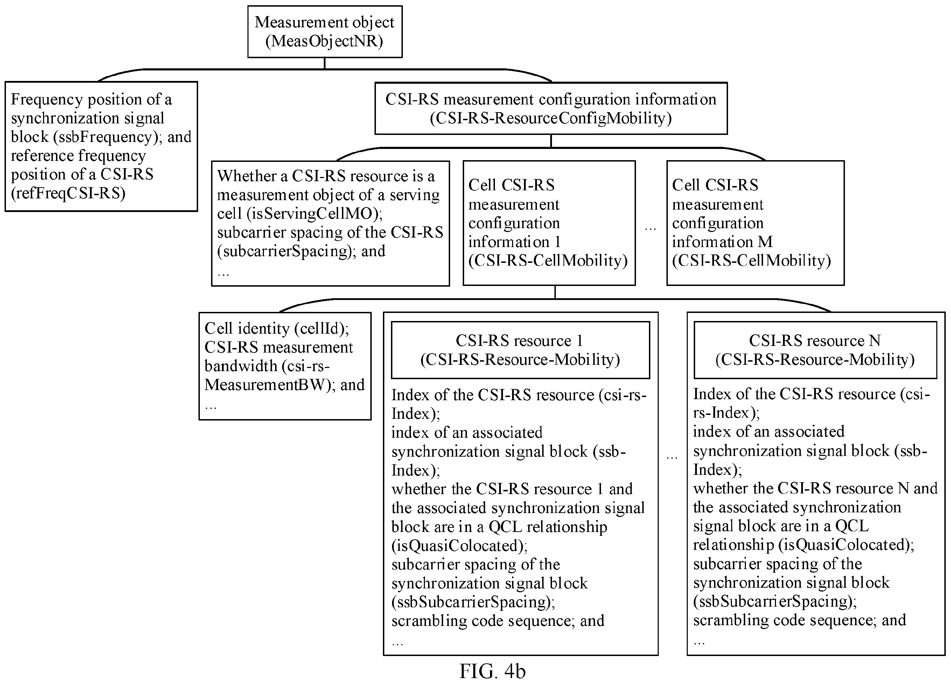

In some other feasible embodiments, for example, FIG. 4b is a schematic structural diagram of an example of another measurement object configuration according to an embodiment of this application. Common parameters in the measurement object configuration include a frequency position of a synchronization signal block associated with a CSI-RS, and a subcarrier spacing parameter of a synchronization signal block associated with a CSI-RS is included in a mobility measurement configuration of each CSI-RS. To be specific, synchronization signal blocks associated with all CSI-RSs included in the measurement object have the same frequency position, and synchronization signal blocks associated with a plurality of CSI-RSs may have different subcarrier spacings.

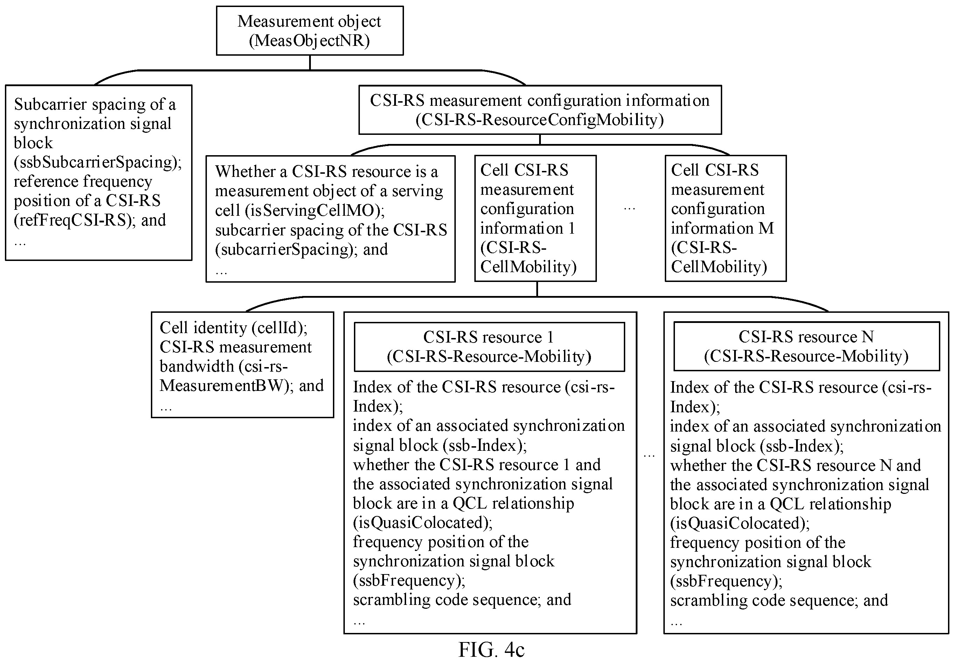

In still other feasible embodiments, for example, FIG. 4c is a schematic structural diagram of an example of still another measurement object configuration according to an embodiment of this application. Common parameters in the measurement object configuration include a subcarrier spacing of a synchronization signal block associated with a CSI-RS, and a frequency position parameter of a synchronization signal block associated with a CSI-RS is included in a mobility measurement configuration of each CSI-RS. To be specific, synchronization signal blocks associated with all CSI-RSs included in the measurement object have the same subcarrier spacing, and synchronization signal blocks associated with a plurality of CSI-RSs may have different frequency positions.

In some feasible embodiments, a first parameter of a synchronization signal block include two parameters. However, common parameters in a measurement object configuration include only one of two parameters included in a first parameter, and the other parameter of two parameters included in a first parameter needs to be independently configured. The independently configured parameter may be configured at a cell level. For example, in FIG. 4a to FIG. 4c, a cell CSI-RS measurement configuration 1 (CSI-RSCellMobility) includes mobility measurement configurations of a plurality of CSI-RSs (CSI-RS-Resource-Mobility) and a common parameter configuration of a cell. The common parameter configuration of the cell includes a cell identity (cellId), CSI-RS measurement bandwidth (csi-rs-MeasurementBW), and the like. If synchronization signal blocks associated with one or more CSI-RSs included in the cell have the same other parameter, the common parameter configuration of the cell may include the other parameter. For example, if the common parameters in the measurement object configuration include subcarrier spacings of synchronization signal blocks associated with all CSI-RSs included in the measurement object, the common parameter configuration of the cell may include frequency positions of the synchronization signal blocks associated with all the CSI-RSs included in the cell; or if the common parameters in the measurement object configuration include frequency positions of synchronization signal blocks associated with all CSI-RSs included in the measurement object, the common parameter configuration of the cell may include subcarrier spacings of the synchronization signal blocks associated with all the CSI-RSs included in the cell. Signaling overheads of configuration may be reduced by using the common configuration.

In some other feasible embodiments, a first parameter of a synchronization signal block include two parameters. However, common parameters in a measurement object configuration include only one of two parameters included in a first parameter, and the other parameter of two parameters included in a first parameter may be configured in a mobility measurement configuration of a CSI-RS. For example, if the common parameters in the measurement object configuration include subcarrier spacings of synchronization signal blocks associated with all CSI-RSs included in the measurement object, the mobility measurement configuration of the CSI-RS may include a frequency position of a synchronization signal block associated with the CSI-RS; or if the common parameters in the measurement object configuration include frequency positions of synchronization signal blocks associated with all CSI-RSs included in the measurement object, the mobility measurement configuration of the CSI-RS may include a subcarrier spacing of a synchronization signal block associated with the CSI-RS.

According to the communication method provided in this embodiment of this application, a parameter of a synchronization signal block associated with a CSI-RS is included in the measurement object configuration, thereby improving accuracy of receiving the associated synchronization signal block. In addition, a common parameter of the synchronization signal block is configured in the measurement object configuration, so that signaling overheads of configuration can be reduced.

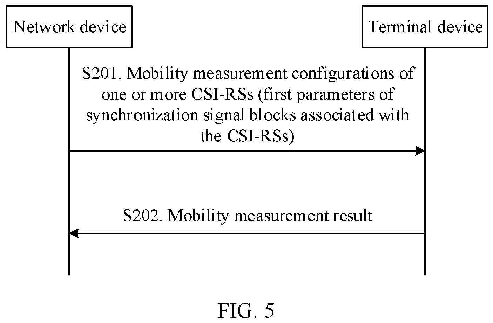

FIG. 5 is a schematic flowchart of another communication method according to an example.

S201. A network device sends mobility measurement configurations of one or more CSI-RSs to a terminal device, and the terminal device receives the mobility measurement configurations of the one or more CSI-RSs, where the mobility measurement configurations of the CSI-RSs include a first parameter of a synchronization signal block associated with the CSI-RSs, and the mobility measurement configurations of the CSI-RSs are used to indicate the terminal device to perform mobility measurement.

S202. The terminal device sends a mobility measurement result to the network device, and the network device receives the mobility measurement result.

In this embodiment, the network device configures a CSI-RS for the terminal device to perform mobility measurement. The network device sends the mobility measurement configurations of the one or more CSI-RSs to the terminal device, or the network device sends a measurement object configuration to the terminal device, where the measurement object configuration includes the mobility measurement configurations of the one or more CSI-RSs. A mobility measurement configuration of a CSI-RS includes a first parameter of a synchronization signal block associated with the CSI-RS. The first parameter of the synchronization signal block includes one or more of the following parameters: a frequency position of the synchronization signal block and a subcarrier spacing of the synchronization signal block. Mobility measurement configurations of different CSI-RSs may include same or different first parameterr of the synchronization signal block associated with the CSI-RS.

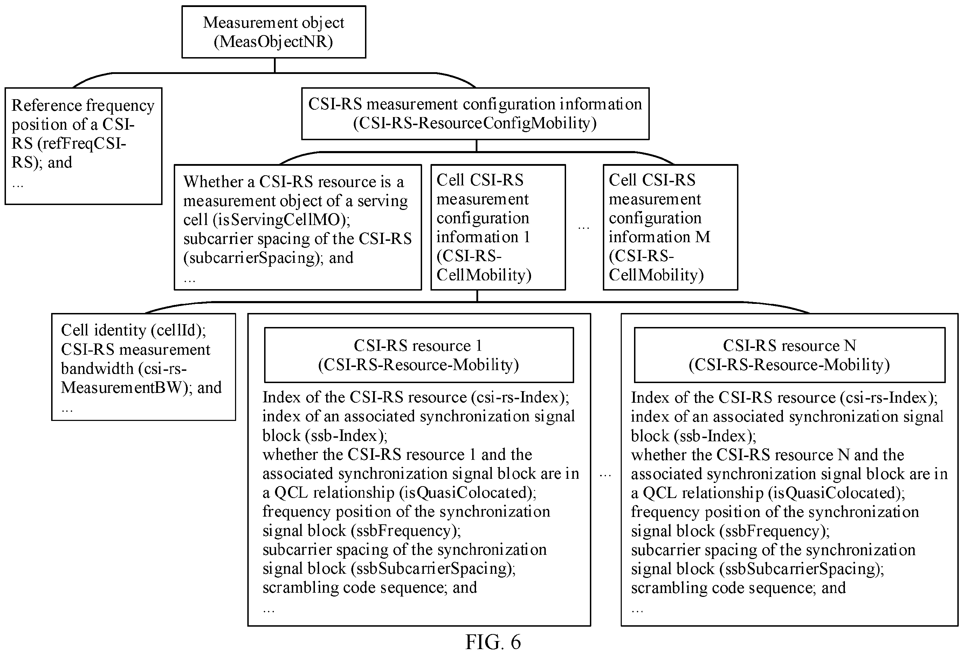

FIG. 6 is a schematic structural diagram of an example of still another measurement object configuration according to an embodiment of this application. A mobility measurement configuration 1 of a CSI-RS includes a frequency position and a subcarrier spacing that are of a synchronization signal block associated with the CSI-RS, and a mobility measurement configuration of another CSI-RS is similar. In addition, a mobility measurement configuration of a CSI-RS may further include an index of a CSI-RS, an index of an associated synchronization signal block, whether the CSI-RS is quasi co-located with the associated synchronization signal block, a scrambling code sequence, and the like. The index of the associated synchronization signal block and whether the CSI-RS is quasi co-located with the associated synchronization signal block may be referred to as second parameters of the synchronization signal block associated with the CSI-RS.

The measurement object configuration or the mobility measurement configuration of the CSI-RS may be represented in a form of a structure. An example of the structure of the mobility measurement configuration of the CSI-RS is as follows:

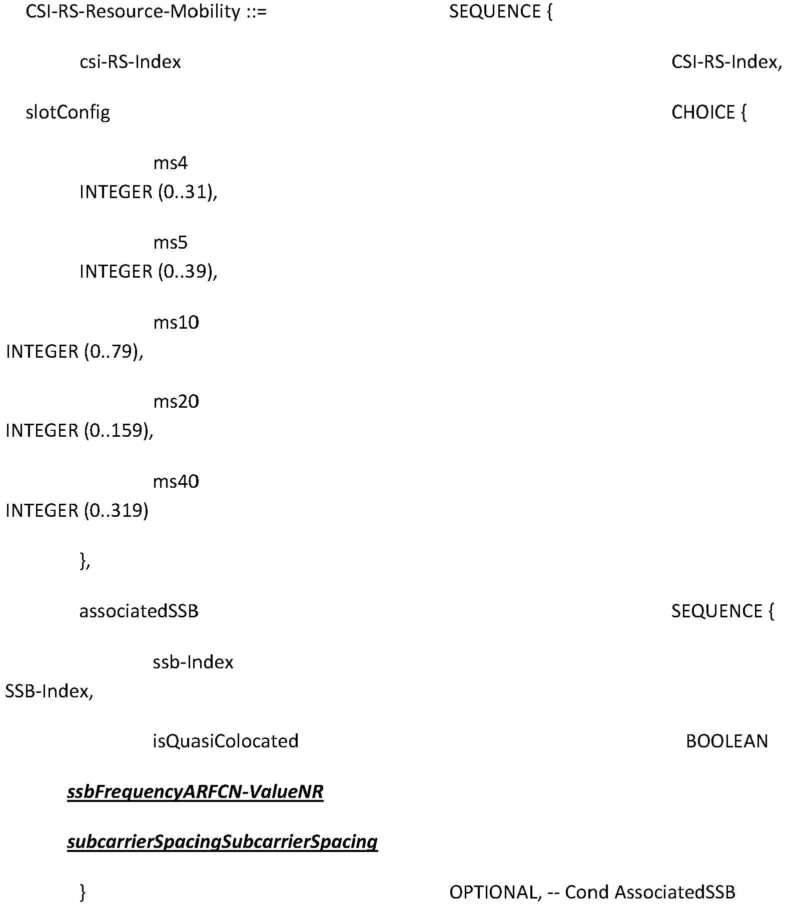

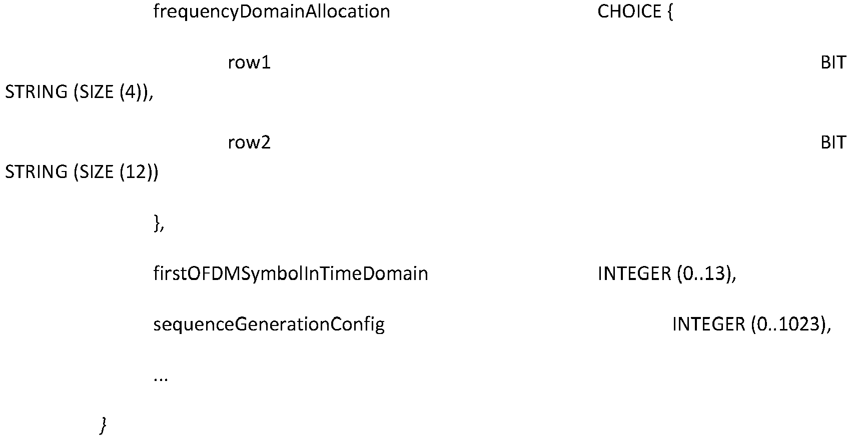

An ssbFrequency field is added to indicate a frequency position of the synchronization signal block associated with the CSI-RS (for example, the frequency position is 2.1 GHz). A subcarrierSpacing field is added to indicate a subcarrier spacing of the associated synchronization signal block (for example, the subcarrier spacing is 30 kHz).

The terminal device may accurately receive, based on a first parameter, of the synchronization signal block, that is included in the mobility measurement configuration of the CSI-RS, the synchronization signal block associated with the CSI-RS. Further, if there is a QCL relationship between the CSI-RS and the synchronization signal block, the terminal device may receive the CSI-RS based on a parameter, such as a Doppler spread or a beam direction, of the associated synchronization signal block. In addition, in an asynchronous network, when measuring a CSI-RS of a neighboring cell based on a mobility measurement configuration of the CSI-RS, the terminal device may determine timing information of the neighboring cell by receiving a synchronization signal block associated with the CSI-RS (where a synchronization signal block of a neighboring cell carries timing information of the neighboring cell), and then receive, based on the timing information, the CSI-RS from the neighboring cell.

The terminal device performs mobility measurement based on the mobility measurement configurations of the CSI-RSs. Specifically, the one or more CSI-RSs are received based on the mobility measurement configurations of the one or more CSI-RSs. The one or more CSI-RSs are measured to obtain the mobility measurement result, and the mobility measurement result is sent to the network device.

In some feasible embodiments, a common configuration of a cell may include one parameter of a first parameter of synchronization signal blocks associated with all CSI-RSs in the cell, and a mobility measurement configuration of each CSI-RS may include the other parameter of a first parameter of a synchronization signal block associated with the CSI-RS. For example, a common configuration of a cell CSI-RS measurement configuration 1 includes a cell identity and CSI-RS measurement bandwidth, and may further include frequency positions of synchronization signal blocks associated with all CSI-RSs in the cell, to be specific, the synchronization signal blocks associated with all the CSI-RSs in the cell have the same frequency position; and a mobility measurement configuration of each CSI-RS in the cell includes a subcarrier spacing of a synchronization signal block associated with the CSI-RS. Alternatively, a common configuration of a cell CSI-RS measurement configuration 1 includes subcarrier spacings of synchronization signal blocks associated with all CSI-RSs in the cell, to be specific, the synchronization signal blocks associated with all the CSI-RSs in the cell have the same subcarrier spacing, and a mobility measurement configuration of each CSI-RS in the cell includes a frequency position of a synchronization signal block associated with the CSI-RS. Signaling overheads of configuration may be reduced by using the common configuration.

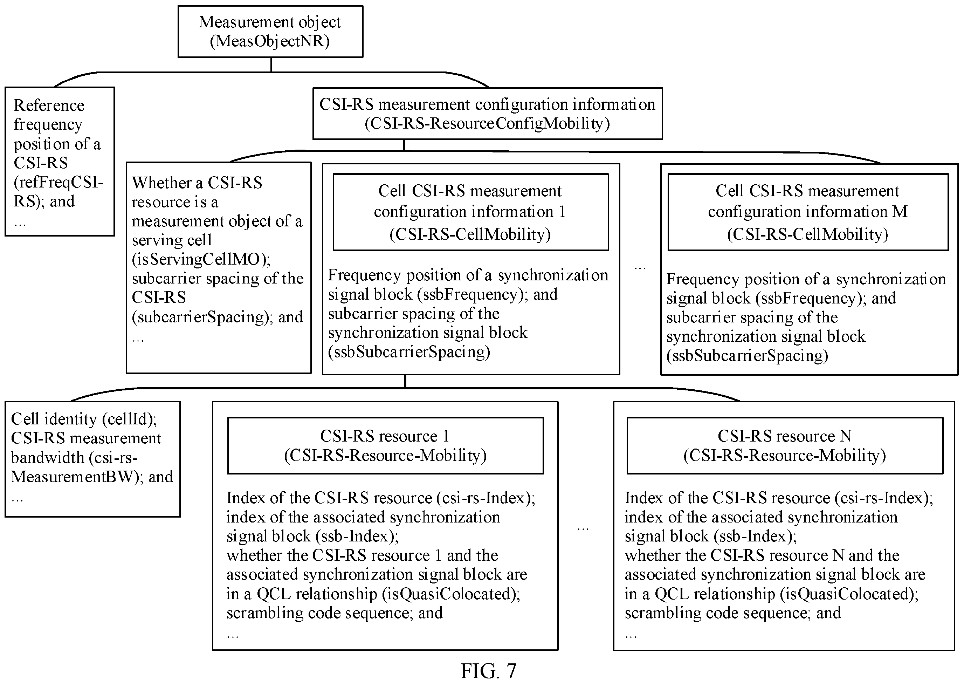

In some other feasible embodiments, FIG. 7 is a schematic structural diagram of an example of still another measurement object configuration according to an embodiment of this application. A common parameter configuration of a cell includes a first parameter: frequency positions and subcarrier spacings of synchronization signal blocks associated with all CSI-RSs in the cell. To be specific, the synchronization signal blocks associated with all the CSI-RSs in the cell have the same frequency position and the same subcarrier spacing. Signaling overheads of configuration may be reduced by using the common configuration.

According to the communication method provided in this embodiment of this application, a parameter of the synchronization signal block associated with a CSI-RS is included in a mobility measurement configuration of the CSI-RS, thereby improving accuracy of receiving the associated synchronization signal block.

In still another embodiment, a case of a synchronous network is considered. To be specific, a terminal device determines, based on timing information of a current serving cell, a timing (timing) of a CSI-RS, of a neighboring cell, that is used for mobility measurement, so as to correctly receive the CSI-RS. However, in some scenarios, the terminal device may have a plurality of serving cells and different serving cells have different timing information. For example, in a non-standalone NR network, an LTE cell (working in a low frequency band) and an NR cell (working in a high frequency band) work in a dual connectivity mode. In this case, the terminal device has two serving cells, namely, an LTE cell and an NR cell, and timings (timing) of the two cells are different. However, an existing mobility measurement configuration of a CSI-RS does not include indication information to specifically indicate a timing of which serving cell is used as a reference. To enable the terminal device to correctly receive a CSI-RS of a neighboring cell in a synchronous network with a plurality serving cells, in this embodiment, a mobility measurement configuration of a CSI-RS further includes a serving cell identity used to determine timing information of a cell for which terminal device needs to perform measurement. Specifically, a field is added to a mobility measurement configuration of a CSI-RS currently used for mobility measurement, to indicate that a timing of which serving cell of the terminal device is used as a reference of a timing of the CSI-RS. Specific signaling is as follows:

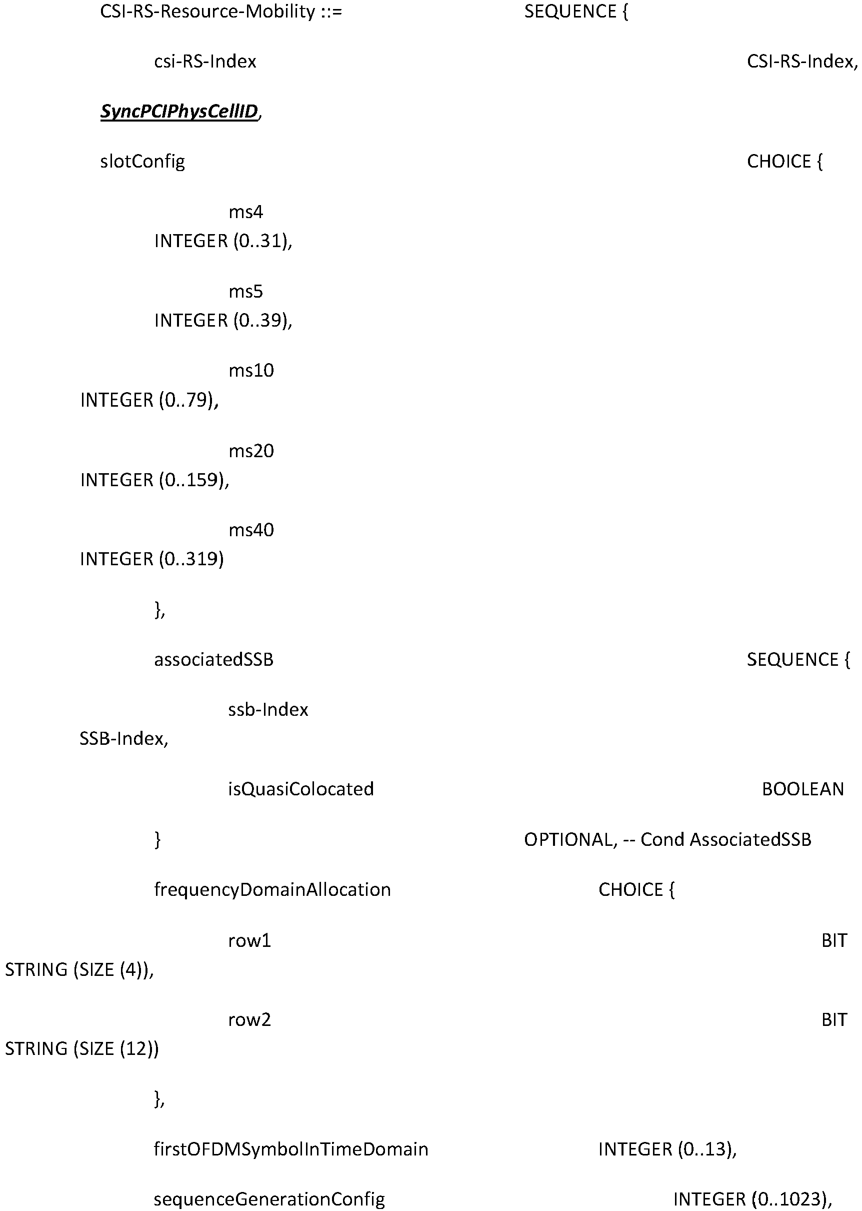

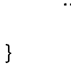

A newly added SyncPCI field is used to indicate an identity of a serving cell whose timing is used as a reference for the timing the CSI-RS.

Similarly, the SyncPCI field is added to a mobility measurement configuration of each CSI-RS. More generally, the network device may configure a common SyncPCI field for all CSI-RSs in one measurement object, or may configure a common SyncPCI field for all CSI-RSs in a same cell of one measurement object, or may configure a SyncPCI field for each CSI-RS in one measurement object.

The foregoing describes in detail the methods in the embodiments of the present invention, and the following provides an apparatus in the embodiments of the present invention.

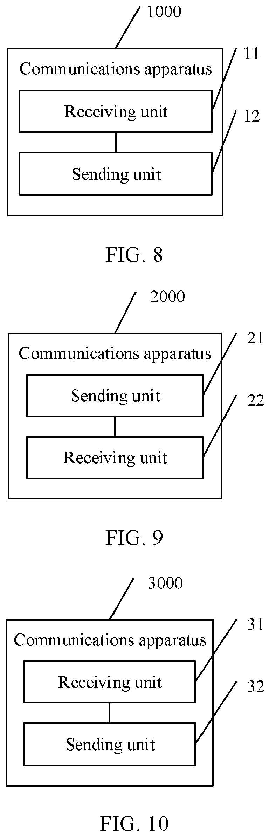

Based on a same concept as that of the communication method in the foregoing embodiment, as shown in FIG. 8, an embodiment of this application further provides a communications apparatus 1000. The communications apparatus 1000 may be applied to the communication method shown in FIG. 3. The communications apparatus 1000 may be the terminal device 200 shown in FIG. 2, or may be a component (for example, a chip) applied to the terminal device 200. The communications apparatus 1000 includes a receiving unit 11 and a sending unit 12.

The receiving unit 11 is configured to receive a measurement object configuration from a network device. The measurement object configuration includes mobility measurement configurations of one or more channel state information-reference signals CSI-RSs, and a first parameter of a synchronization signal block associated with the CSI-RSs, and the measurement object configuration is used to indicate a terminal device to perform mobility measurement.

The sending unit 12 is configured to send a mobility measurement result to the network device.

For more detailed descriptions of the receiving unit 11 and the sending unit 12, reference may be directly made to related descriptions of the terminal device in the method embodiment shown in FIG. 3, and details are not described herein again.

Based on a same concept as that of the communication method in the foregoing embodiment, as shown in FIG. 9, an embodiment of this application further provides a communications apparatus 2000. The communications apparatus 2000 may be applied to the communication method shown in FIG. 3. The communications apparatus 2000 may be the network device 100 shown in FIG. 2, or may be a component (for example, a chip) applied to the network device 100. The communications apparatus 2000 includes a sending unit 21 and a receiving unit 22.

The sending unit 21 is configured to send a measurement object configuration to a terminal device. The measurement object configuration includes mobility measurement configurations of one or more channel state information-reference signals CSI-RSs, and a first parameter of a synchronization signal block associated with the CSI-RSs, and the measurement object configuration is used to indicate the terminal device to perform mobility measurement.

The receiving unit 22 is configured to receive a mobility measurement result from the terminal device.

For more detailed descriptions of the sending unit 21 and the receiving unit 22, reference may be directly made to related descriptions of the network device in the method embodiment shown in FIG. 3, and details are not described herein again.

Based on a same concept as that of the communication method in the foregoing embodiment, as shown in FIG. 10, an embodiment of this application further provides a communications apparatus 3000. The communications apparatus 3000 may be applied to the communication method shown in FIG. 5. The communications apparatus 3000 may be the terminal device 200 shown in FIG. 2, or may be a component (for example, a chip) applied to the terminal device 200. The communications apparatus 3000 includes a receiving unit 31 and a sending unit 32.

The receiving unit 31 is configured to receive mobility measurement configurations, of one or more channel state information-reference signals CSI-RSs, that are from a network device. The mobility measurement configurations of the CSI-RSs include a first parameter of a synchronization signal block associated with the CSI-RSs, and the mobility measurement configurations of the CSI-RSs are used to indicate a terminal device to perform mobility measurement.

The sending unit 32 is configured to send a mobility measurement result to the network device.

In an implementation, the receiving unit 31 is further configured to receive a measurement object configuration from the network device. The measurement object configuration includes the mobility measurement configurations of the one or more CSI-RSs, and the mobility measurement configurations of the CSI-RSs further includes second parameters of the synchronization signal blocks.

For more detailed descriptions of the receiving unit 31 and the sending unit 32, reference may be directly made to related descriptions of the terminal device in the method embodiment shown in FIG. 5, and details are not described herein again.

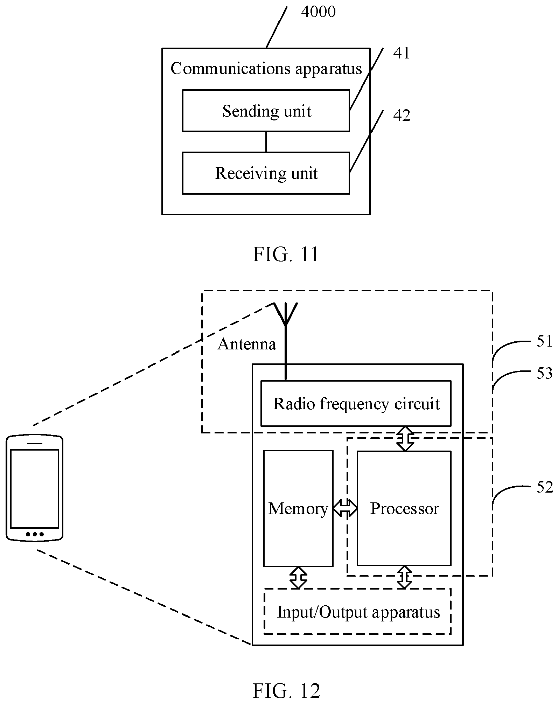

Based on a same concept as that of the communication method in the foregoing embodiment, as shown in FIG. 11, an embodiment of this application further provides a communications apparatus 4000. The communications apparatus 4000 may be applied to the communication method shown in FIG. 5. The communications apparatus 4000 may be the network device 100 shown in FIG. 2, or may be a component (for example, a chip) applied to the network device 100. The communications apparatus 4000 includes a sending unit 41 and a receiving unit 42.

The sending unit 41 is configured to send mobility measurement configurations of one or more channel state information-reference signals CSI-RSs to a terminal device. Information about the mobility measurement configurations of the CSI-RSs includes a first parameter of a synchronization signal block associated with the CSI-RSs, and the mobility measurement configurations of the CSI-RSs are used to indicate the terminal device to perform mobility measurement.

The receiving unit 42 is configured to receive a mobility measurement result from the terminal device.

In an implementation, the sending unit 41 is further configured to send a measurement object configuration to the terminal device. The measurement object configuration includes the mobility measurement configurations of the one or more CSI-RSs, and further includes second parameters of the synchronization signal blocks.

For more detailed descriptions of the sending unit 41 and the receiving unit 42, reference may be directly made to related descriptions of the network device in the method embodiment shown in FIG. 5, and details are not described herein again.

An embodiment of this application further provides a communications apparatus. The communications apparatus is configured to perform the foregoing communication methods. Some or all of the foregoing communication methods may be implemented by using hardware, or may be implemented by using software.

Optionally, in specific implementation, the communications apparatus may be a chip or an integrated circuit.

Optionally, when some or all of the communication methods in the foregoing embodiments are implemented by using software, the communications apparatus includes: a memory, configured to store a program; and a processor, configured to execute the program stored in the memory, so that when the program is executed, the communications apparatus is enabled to implement the communication methods provided in the foregoing embodiments.

Optionally, the memory may be a physically independent unit, or may be integrated with the processor.

Optionally, when some or all of the communication methods in the foregoing embodiments are implemented by using software, the communications apparatus may alternatively include only a processor. A memory configured to store a program is located outside the communications apparatus. The processor is connected to the memory by using a circuit or wire, and is configured to read and execute the program stored in the memory.

The processor may be a central processing unit (central processing unit, CPU), a network processor (network processor, NP), or a combination of a CPU and an NP.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory may include a volatile memory (volatile memory), for example, a random access memory (random-access memory, RAM); or the memory may include a non-volatile memory (non-volatile memory), for example, a flash memory (flash memory), a hard disk (hard disk), or a solid-state drive (solid-state drive, SSD); or the memory may include a combination of the foregoing types of memories.

FIG. 12 is a simplified schematic structural diagram of a terminal device. For ease of understanding and illustration, an example in which the terminal device is a mobile phone is used in FIG. 12. As shown in FIG. 12, the terminal device includes a processor, a memory, a radio frequency circuit, an antenna, and an input/output apparatus. The processor is mainly configured to process a communications protocol and communication data, control the terminal device, execute a software program, and process data of the software program. The memory is mainly configured to store the software program and the data. The radio frequency circuit is mainly configured to perform conversion between a baseband signal and a radio frequency signal, and process the radio frequency signal. The antenna is mainly configured to transmit and receive a radio frequency signal in an electromagnetic wave form. The input/output apparatus such as a touchscreen, a display screen, or a keyboard, is mainly configured to receive data entered by a user and output data to the user. It should be noted that some types of terminal devices may not have the input/output apparatus.

When data needs to be sent, the processor performs baseband processing on the to-be-sent data, and then outputs a baseband signal to the radio frequency circuit. The radio frequency circuit performs radio frequency processing on the baseband signal, and then sends a radio frequency signal in an electromagnetic wave form by using the antenna. When data is sent to the terminal device, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 12 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit having a transceiving function may be considered as a receiving unit and a sending unit of the terminal device (which may also be collectively referred to as a transceiver unit), and the processor having a processing function may be considered as a processing unit of the terminal device. As shown in FIG. 12, the terminal device includes a receiving unit 51, a processing unit 52, and a sending unit 53. The receiving unit 51 may also be referred to as a receiver, a receiver, a receiver circuit, or the like. The sending unit 53 may also be referred to as a transmitter, a transmitter, a transmitter, a transmitter circuit, or the like. The processing unit 52 may also be referred to as a processor, a processing board, a processing module, a processing apparatus, or the like.

For example, in an embodiment, the receiving unit 51 is configured to perform a function of the terminal device in step S101 in the embodiment shown in FIG. 3, and the sending unit 53 is configured to perform a function of the terminal device in step S 102 in the embodiment shown in FIG. 3.

For another example, in another embodiment, the receiving unit 51 is configured to perform a function of the terminal device in step S201 in the embodiment shown in FIG. 5, and the sending unit 53 is configured to perform a function of the terminal device in step S202 in the embodiment shown in FIG. 5.

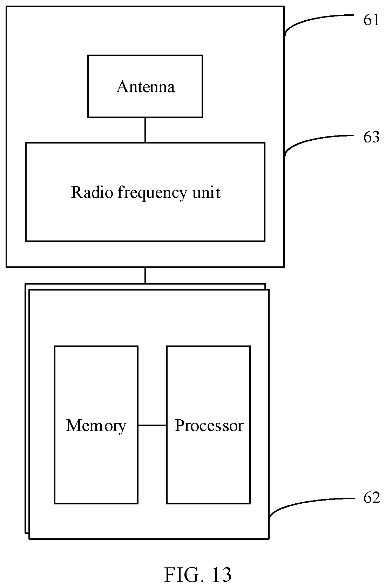

FIG. 13 is a simplified schematic structural diagram of a network device. The network device includes a part 62 and a part for sending and receiving a radio frequency signal and performing conversion. The part for sending and receiving a radio frequency signal and performing conversion further includes a receiving unit 61 and a sending unit 63 (which may also be collectively referred to as a transceiver unit). The part for sending and receiving a radio frequency signal and performing conversion is mainly configured to send and receive the radio frequency signal and perform conversion between the radio frequency signal and a baseband signal. The part 62 is mainly configured to perform baseband processing and control the network device. The receiving unit 61 may also be referred to as a receiver, a receiver, a receiver circuit, or the like. The sending unit 63 may also be referred to as a transmitter, a transmitter, a transmitter, a transmitter circuit, or the like. The part 62 is usually a control center of the network device, and may usually be referred to as a processing unit. The part 62 is configured to control the network device to perform steps performed by the network device in FIG. 3 or FIG. 5. For details, refer to descriptions of the foregoing related parts.

The part 62 may include one or more boards. Each board may include one or more processors and one or more memories. The processor is configured to read and execute a program in the memory to implement a baseband processing function and control the network device. If there are a plurality of boards, the boards may be interconnected to improve a processing capability. In an optional implementation, a plurality of boards may share one or more processors, or a plurality of boards may share one or more memories, or a plurality of boards may share one or more processors.

For example, in an embodiment, the sending unit 63 is configured to perform a function of the network device in step S101 in the embodiment shown in FIG. 3, and the receiving unit 61 is configured to perform a function of the network device in step S102 in the embodiment shown in FIG. 3.

For another example, in another embodiment, the sending unit 63 is configured to perform a function of the network device in step S201 in the embodiment shown in FIG. 5, and the receiving unit 61 is configured to perform a function of the network device in step S202 in the embodiment shown in FIG. 5.

It may be clearly understood by a person skilled in the art that, for the purpose of convenient and brief description, for a specific working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in another manner. For example, the unit division is merely logical function division and may be other division in actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Some or all of the units may be selected based on actual requirements to achieve the objectives of the solutions of the embodiments.

All or some of the foregoing embodiments may be implemented by using software, hardware, firmware, or any combination thereof. When software is used to implement the embodiments, the embodiments may be all or partially implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer readable storage medium, or may be transmitted by using the computer readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer readable storage medium may be any usable medium accessible to the computer, or a data storage device, such as a server or a data center, integrating one or more usable media. The usable medium may be a read-only memory (read-only memory, ROM), a random access memory (random access memory, RAM), or a magnetic medium such as a floppy disk, a hard disk, a magnetic tape, or a magnetic disk, or an optical medium such as a digital versatile disc (digital versatile disc, DVD) or a semiconductor medium such as a solid state disk (solid state disk, SSD).

## Claims

1. A communication method, executed by a terminal device (200), the method comprising:
receiving (S101) a measurement object configuration from a network device, wherein the measurement object configuration comprises mobility measurement configurations of one or more channel state information-reference signals, CSI-RSs, and a first parameter of a synchronization signal block associated with the CSI-RSs, wherein the first parameter is used for receiving the synchronization signal block associated with the CSI-RSs, and the measurement object configuration is used to indicate a terminal device to perform mobility measurement based on the measurement object configuration;
wherein the terminal has a plurality of serving cells, and different serving cells have different timing information; and
sending (S102) a mobility measurement result to the network device;
**characterized in that**
the mobility measurement configurations of the CSI-RSs further comprise a serving cell identity that is used to determine timing information of a cell for which the terminal device needs to perform measurement.

2. The method according to claim 1, wherein the method further comprises:
receiving, according to the first parameter, the synchronization signal block associated with the CSI-RSs.

3. A communication method, executed by a network device (100), the method comprising:
sending (S101) a measurement object configuration to a terminal device, wherein the measurement object configuration comprises mobility measurement configurations of one or more channel state information-reference signals, CSI-RSs, and a first parameter of a synchronization signal block associated with the CSI-RSs, wherein the first parameter is used for receiving the synchronization signal block associated with the CSI-RSs, and the measurement object configuration is used to indicate the terminal device to perform mobility measurement based on the measurement object configuration;
wherein the terminal has a plurality of serving cells, and different serving cells have different timing information; and
receiving (S102) a mobility measurement result from the terminal device;
**characterized in that**
the mobility measurement configurations of the CSI-RSs further comprise a serving cell identity that is used to determine timing information of a cell for which the terminal device needs to perform measurement.

4. The method according to any one of claims 1 to 3, wherein the mobility measurement configurations of the CSI-RSs further comprise a second parameter of the synchronization signal block associated with the CSI-RSs.

5. The method according to any one of claims 1 to 4, wherein the synchronization signal blocks associated with the one or more CSI-RSs have a same first parameter.

6. The method according to any one of claims 1 to 5, wherein the first parameter of the synchronization signal block comprises one or more of the following parameters: a frequency position of the synchronization signal block and a subcarrier spacing of the synchronization signal block.

7. The method according to claim 4, wherein the second parameter of the synchronization signal block comprises one or more of the following parameters: an index of the synchronization signal block and whether the CSI-RS is quasi co-located with the synchronization signal block.

8. A terminal device (200) apparatus, comprising:
a receiving unit (11), configured to receive a measurement object configuration from a network device, wherein the measurement object configuration comprises mobility measurement configurations of one or more channel state information-reference signals, CSI-RSs, and a first parameter of a synchronization signal block associated with the CSI-RSs, wherein the first parameter is used for receiving the synchronization signal block associated with the CSI-RSs, and the measurement object configuration is used to indicate a terminal device to perform mobility measurement based on the measurement object configuration;
wherein the terminal has a plurality of serving cells, and different serving cells have different timing information;
and
a sending unit (12), configured to send a mobility measurement result to the network device;
**characterized in that**
the mobility measurement configurations of the CSI-RSs further comprise a serving cell identity that is used to determine timing information of a cell for which the terminal device needs to perform measurement.

9. The apparatus according to claim 8, wherein the receiving unit (11) is further configured to receive, according to the first parameter, the synchronization signal block associated with the CSI-RSs.

10. A network device (100) apparatus, comprising:
a sending unit (21), configured to send a measurement object configuration to a terminal device, wherein the measurement object configuration comprises mobility measurement configurations of one or more channel state information-reference signals, CSI-RSs, and a first parameter of a synchronization signal blocks associated with the CSI-RSs, wherein the first parameter is used for receiving the synchronization signal block associated with the CSI-RSs, and the measurement object configuration is used to indicate the terminal device to perform mobility measurement based on the measurement object configuration;
wherein the terminal has a plurality of serving cells, and different serving cells have different timing information; and
a receiving unit (21), configured to receive a mobility measurement result from the terminal device;
**characterized in that**
the mobility measurement configurations of the CSI-RSs further comprise a serving cell identity that is used to determine timing information of a cell for which the terminal device needs to perform measurement.

11. The apparatus according to any one of claims 8 to 10, wherein the synchronization signal blocks associated with the one or more CSI-RSs have a same first parameter.

12. The apparatus according to any one of claims 8 to 11, wherein the first parameter of the synchronization signal block comprises one or more of the following parameters: a frequency position of the synchronization signal block and a subcarrier spacing of the synchronization signal block.

13. A computer program, comprising a program or an instruction, wherein when the computer program is run on a computer associated with a terminal device, the terminal device is caused to perform the method of one of claims 1, 2, 4-7, and when the program is run on a computer associated with a network device, the network device is caused to perform the method of one of claims 3-7.

## Patentansprüche

1. Kommunikationsverfahren, das durch eine Endgerätvorrichtung (200) ausgeführt wird, das Verfahren umfassend:
Empfangen (S101) einer Messobjektkonfiguration von einer Netzwerkvorrichtung, wobei die Messobjektkonfiguration Mobilitätsmesskonfigurationen eines oder mehrerer Kanalzustandsinformationsreferenzsignale (channel state information-reference signals - CSI-RSs) und eines ersten Parameters eines Synchronisationssignalblocks umfasst, der den CSI-RSs zugeordnet ist, wobei der erste Parameter zum Empfangen des Synchronisationssignalblocks verwendet wird, der den CSI-RSs zugeordnet ist, und die Messobjektkonfiguration verwendet wird, um eine Endgerätvorrichtung anzuzeigen, um eine Mobilitätsmessung basierend auf der Messobjektkonfiguration durchzuführen;
wobei das Endgerät eine Vielzahl von aktiven Funkzellen aufweist und unterschiedliche aktive Funkzellen unterschiedliche Zeitsteuerungsinformationen aufweisen; und
Senden (S102) eines Mobilitätsergebnisses an die Netzwerkvorrichtung;
**dadurch gekennzeichnet, dass**
die Mobilitätsmesskonfigurationen der CSI-RSs ferner eine Identität der aktiven Funkzelle umfassen, die verwendet wird, um Zeitsteuerungsformationen einer Zelle zu bestimmen, für die die Endgerätvorrichtung eine Messung durchführen muss.

2. Verfahren nach Anspruch 1, wobei das Verfahren ferner umfasst:
Empfangen, gemäß dem ersten Parameter, des Synchronisationssignalblocks, der den CSI-RSs zugeordnet ist.

3. Kommunikationsverfahren, das durch eine Netzwerkvorrichtung (100) ausgeführt wird, das Verfahren umfassend:
Senden (S101) einer Messobjektkonfiguration an eine Endgerätvorrichtung, wobei die Messobjektkonfiguration Mobilitätsmesskonfigurationen eines oder mehrerer Kanalzustandsinformationsreferenzsignale (CSI-RSs) und einen ersten Parameter eines Synchronisationssignalblocks umfasst, der den CSI-RSs zugeordnet ist, wobei der erste Parameter zum Empfangen des Synchronisationssignalblocks verwendet wird, der den CSI-RSs zugeordnet ist, und die Messobjektkonfiguration verwendet wird, um die Endgerätvorrichtung anzuzeigen, um eine Mobilitätsmessung basierend auf der Messobjektkonfiguration durchzuführen;
wobei das Endgerät eine Vielzahl von aktiven Funkzellen aufweist und unterschiedliche aktive Funkzellen unterschiedliche Zeitsteuerungsinformationen aufweisen; und
Empfangen (S102) eines Mobilitätsergebnisses von der Endgerätvorrichtung;
**dadurch gekennzeichnet, dass**
die Mobilitätsmesskonfigurationen der CSI-RSs ferner eine Identität der aktiven Funkzelle umfassen, die verwendet wird, um Zeitsteuerungsformationen einer Zelle zu bestimmen, für die die Endgerätvorrichtung die Messung durchführen muss.

4. Verfahren nach einem der Ansprüche 1 bis 3, wobei die Mobilitätsmesskonfigurationen der CSI-RSs ferner einen zweiten Parameter des Synchronisationssignalblocks umfassen, der den CSI-RSs zugeordnet ist.

5. Verfahren nach einem der Ansprüche 1 bis 4, wobei die Synchronisationssignalblöcke, die dem einen oder den mehreren CSI-RSs zugeordnet sind, den gleichen ersten Parameter aufweisen.

6. Verfahren nach einem der Ansprüche 1 bis 5, wobei der erste Parameter des Synchronisationssignalblocks einen oder mehrere der folgenden Parameter umfasst:
eine Frequenzposition des Synchronisationssignalblocks und einen Hilfsträgerabstand des Synchronisationssignalblocks.

7. Verfahren nach Anspruch 4, wobei der zweite Parameter des Synchronisationssignalblocks einen oder mehrere der folgenden Parameter umfasst:
einen Index des Synchronisationssignalblocks und ob das CSI-RS quasi gemeinsam mit dem Synchronisationssignalblock untergebracht ist.

8. Endgerätvorrichtungs(200)-Einrichtung, umfassend:
eine Empfangseinheit (11), die konfiguriert ist, um eine Messobjektkonfiguration von einer Netzwerkvorrichtung zu empfangen, wobei die Messobjektkonfiguration Mobilitätsmesskonfigurationen eines oder mehrerer Kanalzustandsinformationsreferenzsignale (CSI-RSs) und einen ersten Parameter eines Synchronisationsignalblocks umfasst, der den CSI-RSs zugeordnet ist, wobei der erste Parameter zum Empfangen des Synchronisationssignalblocks verwendet wird, der den CSI-RSs zugeordnet ist, und die Messobjektkonfiguration verwendet wird, um eine Endgerätvorrichtung anzuzeigen, um die Mobilitätsmessung basierend auf der Messobjektkonfiguration durchzuführen;
wobei das Endgerät eine Vielzahl von aktiven Funkzellen aufweist und unterschiedliche aktive Funkzellen unterschiedliche Zeitsteuerungsinformationen aufweisen; und
eine Sendeeinheit (12), die konfiguriert ist, um ein Mobilitätsmessergebnis an die Netzwerkvorrichtung zu senden;
**dadurch gekennzeichnet, dass**
die Mobilitätsmesskonfigurationen der CSI-RSs ferner eine Identität der aktiven Funkzelle umfassen, die verwendet wird, um Zeitsteuerungsformationen einer Zelle zu bestimmen, für die die Endgerätvorrichtung die Messung durchführen muss.

9. Einrichtung nach Anspruch 8, wobei die Empfangseinheit (11) ferner konfiguriert ist, um, gemäß dem ersten Parameter, den Synchronisationssignalblock zu empfangen, der den CSI-RSs zugeordnet ist.

10. Netzwerkvorrichtungs(100)-Einrichtung, umfassend:
eine Sendeeinheit (21), die konfiguriert ist, um eine Messobjektkonfiguration an eine Endgerätvorrichtung zu senden, wobei die Messobjektkonfiguration Mobilitätsmesskonfigurationen eines oder mehrerer Kanalzustandsinformationsreferenzsignale (CSI-RSs) und einen ersten Parameter von Synchronisationsignalblöcken umfasst, die den CSI-RSs zugeordnet sind, wobei der erste Parameter zum Empfangen des Synchronisationssignalblocks verwendet wird, der den CSI-RSs zugeordnet ist, und die Messobjektkonfiguration verwendet wird, um die Endgerätvorrichtung anzuzeigen, um die Mobilitätsmessung basierend auf der Messobjektkonfiguration durchzuführen;
wobei das Endgerät eine Vielzahl von aktiven Funkzellen aufweist und unterschiedliche aktive Funkzellen unterschiedliche Zeitsteuerungsinformationen aufweisen; und
eine Empfangseinheit (21), die konfiguriert ist, um ein Mobilitätsmessergebnis von der Endgerätvorrichtung zu empfangen;
**dadurch gekennzeichnet, dass**
die Mobilitätsmesskonfigurationen der CSI-RSs ferner eine Identität der aktiven Funkzelle umfassen, die verwendet wird, um Zeitsteuerungsformationen einer Zelle zu bestimmen, für die die Endgerätvorrichtung die Messung durchführen muss.

11. Einrichtung nach einem der Ansprüche 8 bis 10, wobei die Synchronisationssignalblöcke, die dem einen oder den mehreren CSI-RSs zugeordnet sind, den gleichen ersten Parameter aufweisen.

12. Einrichtung nach einem der Ansprüche 8 bis 11, wobei der erste Parameter des Synchronisationssignalblocks einen oder mehrere der folgenden Parameter umfasst:
eine Frequenzposition des Synchronisationssignalblocks und einen Hilfsträgerabstand des Synchronisationssignalblocks.

13. Computerprogramm, umfassend ein Programm oder eine Anweisung, wobei, wenn das Computerprogramm auf einem Computer ablaufen gelassen wird, der einer Endgerätvorrichtung zugeordnet ist, die Endgerätvorrichtung veranlasst wird, das Verfahren nach einem der Ansprüche 1, 2, 4 bis 7 durchzuführen, und wenn das Programm auf einem Computer ablaufen gelassen wird, der einer Netzwerkvorrichtung zugeordnet ist, die Netzwerkvorrichtung veranlasst wird, das Verfahren nach einem der Ansprüche 3 bis 7 durchzuführen.

## Revendications

1. Procédé de communication, exécuté par un dispositif terminal (200), le procédé comprenant :
la réception (S101) d'une configuration de l'objet de mesure d'un dispositif de réseau, la configuration de l'objet de mesure comprenant des configurations de mesure de mobilité d'un ou plusieurs signaux de référence d'informations d'état de canal, CSI-RS, et un premier paramètre d'un bloc de signal de synchronisation associé au CSI -RS, le premier paramètre étant utilisé pour recevoir le bloc de signal de synchronisation associé aux CSI-RS, et la configuration de l'objet de mesure étant utilisée pour indiquer un dispositif terminal pour effectuer une mesure de mobilité sur la base de la configuration de l'objet de mesure ;
le terminal ayant une pluralité de cellules de desserte, et différentes cellules de desserte ayant des informations de synchronisation différentes ; et
l'envoi (S102) d'un résultat de mesure de mobilité au dispositif réseau ;
**caractérisé en ce que**
les configurations de mesure de mobilité des CSI-RS comprennent en outre une identité de cellule de desserte qui est utilisée pour déterminer des informations de synchronisation d'une cellule pour laquelle le dispositif terminal doit effectuer une mesure.

2. Procédé selon la revendication 1, le procédé comprenant en outre :
la réception, selon le premier paramètre, du bloc de signaux de synchronisation associé aux CSI-RS.

3. Procédé de communication, exécuté par un dispositif réseau (100), le procédé comprenant :
l'envoi (S101) d'une configuration de l'objet de mesure à un dispositif terminal, la configuration de l'objet de mesure comprenant des configurations de mesure de mobilité d'un ou plusieurs signaux de référence d'informations d'état de canal, CSI-RS, et un premier paramètre d'un bloc de signal de synchronisation associé au CSI -RS, le premier paramètre étant utilisé pour recevoir le bloc de signal de synchronisation associé aux CSI-RS, et la configuration de l'objet de mesure étant utilisée pour indiquer au dispositif terminal d'effectuer une mesure de mobilité sur la base de la configuration de l'objet de mesure ;
le terminal ayant une pluralité de cellules de desserte, et différentes cellules de desserte ayant des informations de synchronisation différentes ; et
la réception (S102) d'un résultat de mesure de mobilité du dispositif terminal ;
**caractérisé en ce que**
les configurations de mesure de mobilité des CSI-RS comprennent en outre une identité de cellule de desserte qui est utilisée pour déterminer des informations de synchronisation d'une cellule pour laquelle le dispositif terminal doit effectuer une mesure.

4. Procédé selon l'une quelconque des revendications 1 à 3, les configurations de mesure de mobilité des CSI-RS comprenant en outre un second paramètre du bloc de signaux de synchronisation associé aux CSI-RS.

5. Procédé selon l'une quelconque des revendications 1 à 4, les blocs de signaux de synchronisation associés aux un ou plusieurs CSI-RS ayant un même premier paramètre.

6. Procédé selon l'une quelconque des revendications 1 à 5, le premier paramètre du bloc de signal de synchronisation comprenant un ou plusieurs des paramètres suivants : une position de fréquence du bloc de signal de synchronisation et un espacement de sous-porteuse du bloc de signal de synchronisation.

7. Procédé selon la revendication 4, le second paramètre du bloc de signal de synchronisation comprenant un ou plusieurs des paramètres suivants : un index du bloc de signal de synchronisation et le fait de savoir si le CSI-RS est quasi colocalisé avec le bloc de signal de synchronisation.

8. Appareil de dispositif terminal (200), comprenant :
une unité de réception (11), configurée pour recevoir une configuration de l'objet de mesure d'un dispositif de réseau, la configuration de l'objet de mesure comprenant des configurations de mesure de mobilité d'un ou plusieurs signaux de référence d'informations d'état de canal, CSI-RS, et un premier paramètre d'un bloc de signal de synchronisation associé aux CSI-RS, le premier paramètre étant utilisé pour recevoir le bloc de signal de synchronisation associé aux CSI-RS, et la configuration de l'objet de mesure étant utilisée pour indiquer un dispositif terminal pour effectuer une mesure de mobilité en fonction de la configuration de l'objet de mesure ;
le terminal ayant une pluralité de cellules de desserte, et différentes cellules de desserte ayant des informations de synchronisation différentes ; et
une unité d'envoi (12), configurée pour envoyer un résultat de mesure de mobilité au dispositif réseau ;
**caractérisé en ce que**
les configurations de mesure de mobilité des CSI-RS comprennent en outre une identité de cellule de desserte qui est utilisée pour déterminer des informations de synchronisation d'une cellule pour laquelle le dispositif terminal doit effectuer une mesure.

9. Appareil selon la revendication 8, l'unité de réception (11) étant en outre configurée pour recevoir, selon le premier paramètre, le bloc de signal de synchronisation associé aux CSI-RS.

10. Appareil de dispositif réseau (100), comprenant :
une unité d'envoi (21), configurée pour envoyer une configuration de l'objet de mesure à un dispositif terminal, la configuration de l'objet de mesure comprenant des configurations de mesure de mobilité d'un ou plusieurs signaux de référence d'informations d'état de canal, CSI-RS, et un premier paramètre de blocs de signaux de synchronisation associés aux CSI-RS, le premier paramètre étant utilisé pour recevoir le bloc de signal de synchronisation associé aux CSI-RS, et la configuration de l'objet de mesure étant utilisée pour indiquer au dispositif terminal d'effectuer une mesure de mobilité en fonction de la configuration de l'objet de mesure ;
le terminal ayant une pluralité de cellules de desserte, et différentes cellules de desserte ayant des informations de synchronisation différentes ; et
une unité de réception (21), configurée pour recevoir un résultat de mesure de mobilité du dispositif terminal ;
**caractérisé en ce que**
les configurations de mesure de mobilité des CSI-RS comprennent en outre une identité de cellule de desserte qui est utilisée pour déterminer des informations de synchronisation d'une cellule pour laquelle le dispositif terminal doit effectuer une mesure.

11. Appareil selon l'une quelconque des revendications 8 à 10, les blocs de signaux de synchronisation associés aux un ou plusieurs CSI-RS ayant un même premier paramètre.

12. Appareil selon l'une quelconque des revendications 8 à 11, le premier paramètre du bloc de signal de synchronisation comprenant un ou plusieurs des paramètres suivants : une position de fréquence du bloc de signal de synchronisation et un espacement de sous-porteuse du bloc de signal de synchronisation.

13. Programme informatique, comprenant un programme ou une instruction, lorsque le programme informatique est exécuté sur un ordinateur associé à un dispositif terminal, le dispositif terminal étant amené à exécuter le procédé de l'une des revendications 1, 2, 4-7, et lorsque le programme est exécuté sur un ordinateur associé à un dispositif réseau, le dispositif réseau étant amené à exécuter le procédé selon l'une des revendications 3 à 7.
